# FASCICULE DE BREVET EUROPEEN

(11) **EP 0 693 247 B1**
(45) Date de publication et mention de la délivrance du brevet: **11.11.1998**
(21) Numéro de dépôt: 94913144.5
(22) Date de dépôt: 07.04.1994
(51) Int. Cl.: H04Q 7/38

(54) **DISPOSITIF DE SYNCHRONISATION POUR UN TERMINAL D'UN SYSTEME DE RADIOCOMMUNICATION**
SYNCHRONISATIONSEINRICHTUNG FÜR ENDGERAT EINES FUNKKOMMUNIKATIONSSYSTEMS
SYNCHRONIZATION DEVICE FOR A RADIO COMMUNICATION SYSTEM TERMINAL

(30) Priorité: 09.04.1993 FR 9304255
(43) Date de publication de la demande: 24.01.1996
(73) Titulaire: ALCATEL ALSTHOM COMPAGNIE GENERALE D'ELECTRICITE, 75008 Paris (FR)
(72) Inventeur: PINAULT, Francis, F-92270 Bois-Colombes (FR)
(74) Mandataire: Lamoureux, Bernard
(86) Numéro de dépôt international: FR9400389
(87) Numéro de publication internationale: WO9424833

(56) Documents cités:
- EP-A- 0 486 089
- EP-A- 0 522 885

## Description

La présente invention concerne un dispositif de synchronisation pour un terminal d'un système de radiocommunication.

Dans les systèmes de radiocommunication, le système paneuropéen cellulaire numérique de radiocommunication connu sous le nom de système GSM par exemple, les communications transitent entre un terminal et une station de base par des canaux de communication véhiculant des signaux radio. De tels systèmes comprennent une pluralité de canaux prévus soit pour l'émission des terminaux à destination des stations de base, soit pour l'émission des stations de base à destination des terminaux.

Parmi ces derniers canaux, figure un canal de contrôle émis en permanence qui permet à un terminal d'accéder au système par la station de base qui émet ce canal afin de pouvoir établir des communications. Le terminal doit donc identifier ce canal de contrôle pour acquérir les informations qui lui permettent de se déclarer dans le système. Parmi ces informations on trouve notamment des informations de synchronisation, c'est pourquoi il est habituel de parler de procédure de synchronisation.

La solution généralement adoptée pour la synchronisation se déroule en deux étapes. Dans un premier temps le terminal mesure la puissance de tous les canaux affectés à la réception. Ensuite, le terminal essaie de se synchroniser sur le canal reçu avec la plus forte puissance et s'il n'y parvient pas, il essaie sur les autres canaux en les prenant par ordre de puissance à la réception décroissante jusqu'à ce qu'il puisse effectivement se synchroniser. Cette solution est d'ailleurs celle qui figure dans les recommandations 4.08 version 3.11.0 et 5.08 version 3.7.0 du GSM.

La procédure de synchronisation est engagée systématiquement lorsque le terminal est mis en marche mais aussi, de manière plus générale, à la suite d'une perte de synchronisation, c'est-à-dire lorsque la liaison radio acheminée notamment par le canal de contrôle entre la station de base et le terminal a été interrompue. Cette interruption peut être volontaire, il s'agit par exemple de l'arrêt du terminal, mais elle peut égalament être involontaire. En effet, il peut arriver que le terminal soit provisoirement dans l'impossibilité de se synchroniser car les conditions de réception radio ne sont pas satisfaisantes. C'est par exemple le cas lorsqu'il est dans un tunnel ou plus généralement lorsqu'il se trouve dans une zone d'ombre au sens radio du terme.

Le terminal va alors essayer de se synchroniser successivement sur chacun des canaux de réception durant une période de synchronisation sans y parvenir et va recommencer cette tentative au cours de périodes de synchronisation répétitives jusqu'à ce que les conditions de réception soient à nouveau convenables. Une telle période de synchronisation peut présenter une durée importante qui est fonction du nombre de canaux de réception et du temps alloué au terminal pour tenter de se synchroniser sur un canal. A titre d'exemple, cette période peut être estimée à 14 secondes dans le cadre du système GSM. Durant une période de synchronisation dont la durée est ici prédéterminée le terminal est inapte à établir une communication, il est indisponible.

Le but de la présente invention est donc de réduire cette période de synchronisation.

Ce but est atteint en agençant dans le terminal un dispositif de synchronisation prévu pour identifier un canal de contrôle parmi une pluralité de canaux de réception au moyen d'un récepteur, comprenant des moyens pour mesurer la puissance de ces canaux de réception et des moyens pour rechercher la synchronisation sur certains au moins de ces canaux identifiés dans une liste. Le dispositif se caractérise en ce que, le système étant ainsi défini qu'un canal de référence ayant une puissance nominale, son iième prédécesseur et son iième successeur présentant une atténuation d'ordre i lorsque le récepteur est accordé sur ce canal de référence, il comprend des moyens de sélection pour que le iième prédécesseur ou le iième successeur ne figure pas dans la liste s'il a une puissance inférieure à la puissance nominale du canal de référence diminuée de l'atténuation d'ordre i.

Ainsi la liste qui pouvait initialement contenir la totalité des canaux de réception se voit réduite par la suppression des canaux présentant une puissance sensiblement plus faible que celle du ou des canaux adjacents. Cela a bien pour effet de réduire la période de synchronisation.

L'invention apparaîtra maintenant de manière plus précise à la lumière de la description de modes de réalisation donnés à titre d'exemple en se référant aux figures annexées qui représentent:

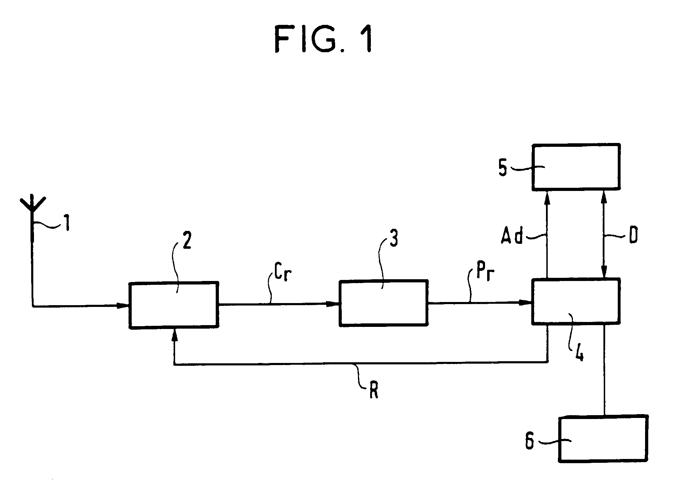

- la figure 1, les éléments d'un terminal nécessaires à sa mise en oeuvre,
- la figure 2, un diagramme par blocs représentant un mode de réalisation.

Bien qu'il s'agisse d'un abus de langage, pour améliorer la clarté de l'exposé, on assimilera maintenant un canal avec le signal radio qu'il véhicule, chaque canal étant caractérisé ici par la fréquence de l'onde porteuse du signal radio correspondant.

Le terminal, de manière connue, comprend essentiellement une antenne 1 prévue pour la réception de différents canaux, un circuit de réception 2 tel qu'un synthétiseur de fréquence raccordé à l'antenne 1 qui sélectionne parmi ces canaux un canal particulier Cᵣ en réponse à un signal de réglage R, un circuit de mesure de puissance 3 qui produit un signal de puissance Pᵣ représentant la puissance de ce canal Cᵣ, et un circuit de contrôle 4 tel qu'un microprocesseur qui produit le signal de réglage R, qui reçoit le signal de puissance Pᵣ pour l'enregistrer dans une mémoire de travail 5 au moyen d'un signal de données D à une adresse affectée au canal Cᵣ, ceci au moyen d'un signal d'adresse Ad.

De manière connue également, le circuit de contrôle 4 a accès à l'identité de tous les canaux que peut recevoir le terminal. A titre d'exemple, il peut s'agir d'une mémoire de canaux 6 associant pour chacun de ces canaux une valeur de consigne du signal de réglage R à une adresse de la mémoire de travail 5. Ainsi, dans un premier temps, le circuit de contrôle 4 produit le signal de réglage R ayant l'une des valeurs de consigne et enregistre dans la mémoire de travail 5 la valeur du signal de puissance P à l'adresse associée à cette valeur de consigne dans la mémoire de canaux 6. Le circuit de contrôle répète cette opération pour toutes les valeurs de consignes de sorte que la mémoire de travail 5 comprenne une liste de s enregistrements affectés chacun à un canal Cᵣ, chaque enregistrement associant à un canal Cᵣ la valeur de consigne correspondante et la puissance Pᵣ à laquelle il est reçu. De manière avantageuse, les canaux Cᵣ sont classés par ordre de fréquence croissante.

Le technicien spécialisé dans les transmissions sait bien qu'un signal émis sur une fréquence précise figure également à une puissance moindre sur les fréquences voisines, ne serait-ce qu'en raison de la bande passante du signal et des caractéristiques de l'équipement d'émission. De même, un équipement de réception qui possède nécessairement une sélectivité limitée reçoit non seulement le signal correspondant à la fréquence sur laquelle il est accordé mais également des signaux émis à des fréquences voisines sous une forme atténuée.

Ce phénomène se traduit dans le cas qui nous préoccupe par le fait que le circuit de réception 2 lorsqu'il est accordé sur le canal Cᵣ reçoit effectivement ce canal à sa puissance nominale Pᵣ mais reçoit également les canaux Cᵣ₋₁ et Cᵣ₊₁ à leurs puissances nominales diminuées d'un premier facteur d'atténuation A₁. Il reçoit également les canaux Cᵣ₋₂ et Cᵣ₊₂ à leurs puissances nominales Pᵣ₋₂ et Pᵣ₊₂ diminuées d'un deuxième facteur d'atténuation A₂, et l'on peut ainsi étendre le nombre des canaux voisins Cᵣ₋ᵢ et Cᵣ₊ᵢ du canal de référence Cᵣ reçus avec un iième facteur d'atténuation Aᵢ par rapport à leur puissance nominale. Ce phénomène est si bien connu qu'il est en général spécifié dans les systèmes de transmission. A titre d'exemple, dans le GSM, il est prévu qu'un canal présente une atténuation A₁ valant 18 dB dans le canal qui le précède et dans celui qui le suit. Dans ce cas, si la synchronisation s'est avérée impossible sur le canal de référence Cᵣ, il est inutile de tenter une synchronisation sur le canal précédent Cᵣ₋₁ ou sur le canal suivant Cᵣ₊₁ si ceux-ci présentent une puissance inférieure à celle du canal de référence diminuée de 18 db.

A cet effet le circuit de contrôle 4 à accès à une série de valeurs prédéterminées que l'on conviendra d'appeler facteurs d'atténuation d'ordre i ou i varie de 1 à n, n étant au moins égal à 1. Ces facteurs d'atténuation peuvent résulter d'une norme mais peuvent aussi dériver du système de radiocommunication si rien n'est prévu dans la norme, par exemple. Ils peuvent également être déterminés de manière empirique. Une solution pratique consiste à enregistrer ces facteurs d'atténuation dans la mémoire de canaux 6.

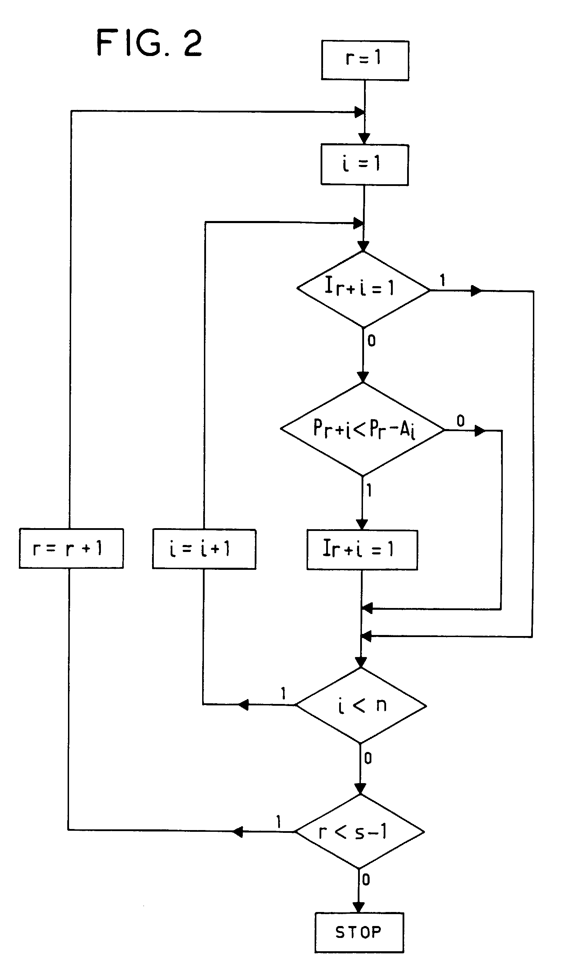

En référence à la figure 2, le circuit de contrôle 4 sélectionne le premier canal de la liste C₁ dans la mémoire de travail 5 pour lire sa puissance P₁. Il lit ensuite la puissance P₂ du deuxième canal C₂. Si celle-ci est inférieure à P₁ diminuée du facteur d'atténuation d'ordre 1 A₁, le deuxième canal C₂ est supprimé de la liste. Ceci peut se faire en positionnant à 1 un indicateur I₂ c'est-à-dire un bit spécifique de l'enregistrement à l'adresse correspondante dans la mémoire de travail. Dans le cas contraire, le deuxième canal C2 est naturellement conservé dans la liste.

Le circuit de contrôle 4 lit ensuite la puissance P₃ du troisième canal C₃. Si celle-ci est inférieure à P₁ diminuée du facteur d'atténuation d'ordre 2 A₂, le troisième canal C₃ est supprimé de la liste au moyen de l'indicateur I₃.

Le circuit de contrôle 4 procède ainsi de la même manière jusqu'au (n+1)ième canal Cₙ₊₁ puisqu'on a prévu d'utiliser n facteurs d'atténuation.

Ensuite le circuit de contrôle 4 considère le prochain canal de la liste qui n'a pas été supprimé. Il peut s'agir du deuxième canal C₂, du troisième C₃ ou de tout autre. On considérera donc qu'il s'agit du canal de référence Cᵣ. Il lit la puissance Pᵣ de ce canal. Il sélectionne ensuite le premier canal suivant qui n'a pas été supprimé de la liste. Ce peut être le (r+1)ième mais ce n'est pas sûr. On considérera donc qu'il s'agit du (r+i)ième canal Cᵣ₊ᵢ, il lit la puissance Pᵣ₊ᵢ de ce canal. Si celle-ci est inférieure à Pᵣ diminuée du facteur d'atténuation d'ordre i Aᵢ, le (r+i)iéme canal Cᵣ₊ᵢ est supprimé de la liste au moyen de l'indicateur Iᵣ₊ᵢ. Le circuit de contrôle réitère cette opération de comparaison à la puissance Pᵣ jusqu'au (r+n)ième canal Cᵣ₊ₙ.

Après avoir examiné les successeurs Cᵣ₊ᵢ du canal de référence Cᵣ, le circuit de contrôle 4 examine ses prédécesseurs Cᵣ₋ᵢ sous réserve cependant que r-i soit supérieur à 1. Il sélectionne donc le premier canal précédent le canal de référence Cᵣ qui n'a pas été supprimé de la liste. Ce peut être le (r-1)ième mais ce n'est pas sûr. On considérera qu'il s'agit du (r-i)ième canal C_{r-i.} Il lit la puissance Pᵣ₋ᵢ de ce canal. Si celle-ci est inférieure à Pᵣ diminuée du facteur d'atténuation d'ordre i Aᵢ, le (r-i)ième canal Cᵣ₋ᵢ est supprimé de la liste au moyen de l'indicateur Iᵣ₋ᵢ. Le circuit de contrôle réitère cette opération de comparaison à la puissance Pᵣ jusqu'au (r-n)ième canal Cᵣ₋ₙ.

De manière générale, le circuit de contrôle 4 analyse la puissance des n canaux qui suivent et des n canaux qui précédent un canal de la liste sous réserve qu'ils n'aient pas été supprimés de la liste auparavant. Il procède ainsi pour tous les canaux de réception jusqu'à l'avant-dernier, le (s-1)ième.

Dans une variante de réalisation de l'invention tous les canaux de réception sont examinés sans tenir compte du fait que les indicateurs correspondants aient été positionnés à un ou non.

Quelle que soit la solution adoptée, le résultat de cette étape de sélection est une liste modifiée comprenant un nombre d'enregistrements généralement inférieur à celui de la liste initiale et, au maximum, un nombre égal.

A l'issue de cette étape de sélection, le circuit de contrôle 4 procède à nouveau comme il est connu de le faire en ne considérant toutefois que les seuls canaux de la liste pour lesquels l'indicateur Iᵣ n'est pas positionné à un. Il classe ces canaux dans la mémoire de travail 5 par ordre de puissance décroissante en conservant pour chacun une information significative de la valeur de consigne correspondante. Le résultat de cette opération est donc une liste ou figure des valeurs de consignes classées selon l'ordre de puissance décroissante des canaux correspondant.

Le circuit de contrôle 4 produit comme signal de réglage le premier élément de la liste et commande alors le terminal d'une manière connue pour qu'il fasse une tentative de synchronisation sur le canal correspondant. Si la tentative réussit le but est atteint, tandis que si elle échoue il recommence en prenant le deuxième élément de la liste et ainsi de suite jusqu'à la fin de la liste. Si lorsque la liste a été totalement épuisée la synchronisation n'est pas acquise, le circuit de contrôle 4 recommence alors la totalité des opérations décrites ci-dessus en commençant par effectuer à nouveau la mesure de puissance de tous les canaux.

L'invention a été présentée en considérant que la liste initiale comprenait tous les canaux de réception. Il ne s'agit pas là d'une nécessité et elle s'applique aussi si cette liste est déjà le résultat d'un premier tri effectué sur d'autres critères.

Par ailleurs, on a considéré que l'étape de sélection était intégralement exécutée avant toute tentative de synchronisation. Il s'agit là simplement d'un mode de mise en oeuvre parmi d'autres.

En effet, le circuit de contrôle 4 peut commencer par classer les canaux de réception par ordre de puissance décroissante pour établir la liste initiale. On rappelle ici que l'indice r du canal Cᵣ identifie toujours le rang de ce canal dans la suite des canaux classés par ordre de fréquence croissante. Ce circuit effectue donc une tentative de synchronisation sur le premier canal de la liste, le canal de référence Cᵣ.

Si cette tentative réussit, la procédure peut s'arrêter là, mais dans certains cas, il est souhaitable de connaître la totalité des canaux sur lesquels la synchronisation peut être obtenue. Ainsi, le circuit de contrôle 4 compare ensuite la puissance Pᵣ₋ᵢ du canal Cᵣ₋ᵢ à celle Pᵣ du canal de de référence et si celle-là est inférieure à celle-ci diminuée du facteur d'atténuation d'ordre i Aᵢ, il supprime le (r-i)ième canal. Il fait ensuite la même opération pour le canal Cᵣ₊ᵢ comme cela a déjà été présenté. Les comparaisons sont naturellement effectuées pour toutes les valeurs de i.

A présent, le circuit de contrôle 4 fait une tentative de synchronisation sur le premier canal de réception qui suit dans la liste et qui n'en a pas été supprimé. La procédure est alors répétée de manière identique sur les canaux voisins qui n'ont pas été supprimés.

La succession d'une tentative de synchronisation et de sélection des canaux voisins est ainsi répétée jusqu'à épuisement de la liste.

## Revendications

1. Dispositif de synchronisation pour un terminal d'un système de radiocommunication prévu pour identifier un canal de contrôle parmi une pluralité de canaux de réception au moyen d'un récepteur (2), comprenant des moyens (3) pour mesurer la puissance desdits canaux de réception et des moyens (4) pour rechercher la synchronisation sur certains au moins de ces canaux identifiés dans une liste (5), caractérisé en ce que, ledit système étant ainsi défini qu'un canal de référence (Cᵣ) ayant une puissance nominale (Pᵣ), son iième prédécesseur (Cᵣ₋ᵢ) et son iième successeur (Cᵣ₊ᵢ) présentant une atténuation d'ordre i (Aᵢ) lorsque ledit récepteur (2) est accordé sur ledit canal de référence (Cᵣ), il comprend des moyens de sélection pour que ledit iième prédécesseur (Cᵣ₋ᵢ) ou ledit iième successeur (Cᵣ₊ᵢ), ne figure pas dans ladite liste s'il a une puissance inférieure à ladite puissance nominale (Pᵣ) dudit canal de référence (Cᵣ) diminuée de ladite atténuation d'ordre i (Aᵢ).

## Patentansprüche

1. Synchronisationseinrichtung für ein Endgerät eines Funkkommunikationssystems, die zur Identifizierung eines Steuerkanals unter einer Vielzahl von Empfangskanälen mittels eines Empfängers (2) vorgesehen ist, die Mittel (3) zum Messen der Leistung der Empfangskanäle und Mittel (4) zum Suchen der Synchronisation auf wenigstens einige dieser in einer Liste (5) identifizierten Kanäle umfaßt, dadurch gekennzeichnet, daß wenn das System so definiert ist, daß ein Bezugskanal (Cᵣ), der eine Nominalleistung (Pᵣ) hat, wobei sein i-ter Vorgänger (Cᵣ₋ᵢ) und sein i-ter Nachfolger (Cᵣ₊ᵢ) eine Dämpfung (Aᵢ) der Ordnung i aufweisen, wenn der Empfänger (2) auf den Bezugskanal (Cᵣ) abgestimmt ist, sie Mittel zur Auswahl aufweist, damit der i-te Vorgänger (Cᵣ₋ᵢ) oder der i-te Nachfolger (Cᵣ₊ᵢ) nicht in der Liste vorkommt, wenn er eine Leistung hat, die geringer als die Nominalleistung (Pᵣ) des Bezugskanals (Cᵣ), vermindert um die Dämpfung (Aᵢ) der Ordnung i, ist.

## Claims

1. Synchronisation device for a terminal of a radio communication system adapted to identify a control channel constituting one of a plurality of receive channels by means of a receiver (2), comprising means (3) to measure the power of said receive channels and means (4) for attempting synchronisation to at least some of said channels identified in a list (5), characterised in that, said system being such that a reference channel (Cᵣ) of nominal power (Pᵣ), its ith predecessor (Cᵣ₋ᵢ) and its ith successor (Cᵣ₊ᵢ) having an ith order attenuation (Aᵢ) when said receiver (2) is tuned to said reference channel (Cᵣ), it comprises selection means whereby said ith predecessor (Cᵣ₋ᵢ) or said ith successor (Cᵣ₊ᵢ) do not appear in said list if its power is less than the nominal power (Pᵣ) of said reference channel (Cᵣ) reduced by said ith order attenuation (Aᵢ).
